# EUROPÄISCHE PATENTSCHRIFT

(11) **EP 3 398 425 B1**
(45) Veröffentlichungstag und Bekanntmachung des Hinweises auf die Patenterteilung: **10.06.2020**
(21) Anmeldenummer: 18401039.5
(22) Anmeldetag: 18.04.2018
(51) Int. Cl.: A01C 17/00

(54) **LANDWIRTSCHAFTLICHER SCHLEUDERSTREUER UND VERFAHREN ZUR ERMITTLUNG DES STREUBILDES BEI EINEM LANDWIRTSCHAFTLICHEN SCHLEUDERSTREUER**
AGRICULTURAL CENTRIFUGAL SPREADER AND METHOD FOR DETERMINING THE SPREAD PATTERN OF AN AGRICULTURAL CENTRIFUGAL SPREADER
ÉPANDEUR AGRICOLE ET PROCÉDÉ DE DÉTERMINATION DE LA TRAJECTOIRE D'ÉPANDAGE D'UN ÉPANDEUR AGRICOLE

(30) Priorität: 02.05.2017 DE 102017109308
(43) Veröffentlichungstag der Anmeldung: 07.11.2018
(60) Teilanmeldung: 20168161.6
(73) Patentinhaber: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE)

(56) Entgegenhaltungen:
- EP-A1- 3 152 995
- EP-A1- 3 228 173
- EP-A1- 3 241 420

## Beschreibung

Die Erfindung betrifft einen landwirtschaftlichen Schleuderstreuer gemäß dem Oberbegriff des Patentanspruches 1 und ein Verfahren zur Ermittlung des Streubildes bei einem landwirtschaftlichen Schleuderstreuer gemäß dem Oberbegriff des Patentanspruches 5.

Die Einstellung der Parameter landwirtschaftlicher Schleuderstreuer erfolgt durch eine Vielzahl von Sensoren am Schleuderstreuer zunehmend automatisiert. So ist es beispielsweise aus der DE 10 2013 103 060 A1 bekannt, Radarsensoren in der Nähe der Streuscheiben eines Schleuderstreuers anzuordnen, um die Querverteilung des Streugutes zu ermitteln und die Parameter zur Korrektur der Querverteilung des Streugutes ggf. automatisch anzupassen. Auch ist es aus der DE 10 2014 116 023 A1 bekannt, mittels eines Radarsensors die Fluggeschwindigkeit in einiger Entfernung des Schleuderstreuers zu messen und daraus die Wurfweite zu ermitteln. Die EP 3 241 420 A1 und die EP 3 152 995 A1 zeigen Schleuderstreuer, welche Radarsensoren sowohl zur Ermittlung der Querverteilung, als auch zur Ermittlung der Fluggeschwindigkeit beziehungsweise Wurfweite offenbaren.

Für eine optimierte Ermittlung der Wurfweite ist es wünschenswert, zumindest je einen Sensor zur Ermittlung der Wurfweite pro Streuscheibe vorzusehen, also mindestens zwei Sensoren bei üblichen Schleuderstreuern mit zwei Streuscheiben. Je nach Ausrichtung der Sensoren kann es jedoch häufig zu Problemen bei der Einstellung des Schleuderstreuers kommen, da es einen großen Überlappungsbereich im Streufächer des Schleuderstreuers gibt, in den von beiden Streuscheiben Streugut hineingeworfen wird. Eine Messung der Wurfweite in diesem Überlappungsbereich erschwert somit die Einstellung des Schleuderstreuers, da üblicherweise nur die Parameter der Streuscheibe angepasst werden, der der jeweilige Sensor zugeordnet ist, dessen Messwerte diesbezüglich ausgewertet werden, die Messsignale des Sensors unter Umständen jedoch durch Streugut beider Streuscheiben bedingt ist.

Aufgabe der vorliegenden Erfindung ist es ein Verfahren und einen Schleuderstreuer bereitzustellen, mit dem eine verbesserte Einstellung eines gewünschten Streubildes des Schleuderstreuers möglich ist.

Diese Aufgabe wird durch den kennzeichnenden Teil des Anspruchs 1 gelöst. Demnach werden die Sensoren zur Ermittlung der mittleren Wurfweite des Streugutes derart am Schleuderstreuer angeordnet, dass die Messrichtungen der zumindest zwei Sensoren in der horizontalen Ebene zumindest annähernd in Richtung des mittleren Abwurfwinkels der jeweiligen Streuscheibe ausgerichtet sind. Hierbei wird also die horizontale Komponente der Messrichtung betrachtet und die Sensoren derart angeordnet, dass diese zumindest annähernd in Richtung des mittleren Abwurfwinkels der jeweiligen Streuscheibe, der der Sensor zugeordnet ist, ausgerichtet ist. Die Messrichtung der beiden Sensoren ist somit in horizontaler Ebene nichtparallel ausgerichtet. Auf diese Weise kann effektiv verhindert werden, dass die Sensoren das von der jeweils anderen Streuscheibe abgeworfene Streugut erfassen und somit eine fehlerbehaftete Ermittlung der Wurfweite des Streugutes für die jeweilige Streuscheibe erfolgt.

Die Messrichtung der Sensoren kann also auch eine vertikale Komponente besitzen, die allerdings hierbei nicht betrachtet wird und im Prinzip beliebig gewählt werden kann. Vorzugsweise wird die vertikale Komponente in Abhängigkeit der Position der Sensoren am Schleuderstreuer derart gewählt, dass die Geschwindigkeit des Streugut durch die Sensoren in einiger Entfernung, vorzugsweise mehr als 2 m vom Schleuderstreuer entfernt detektiert wird. Hierdurch ist die Geschwindigkeit des Streugutes nach dem Abwurf von der Streuscheibe bereits durch den Luftwiderstand und in Abhängigkeit der Eigenschaften des Streugutes reduziert. Es kann somit aus der Ermittlung der Geschwindigkeit in einiger Entfernung und zumindest einem weiteren Parameter, wie der Abwurfgeschwindigkeit von der Streuscheibe eine Geschwindigkeitsdifferenz und/oder eine mittlere Wurfweite ermittelt werden. Der zumindest eine weitere Parameter, insbesondere die Abwurfgeschwindigkeit kann durch eine weitere Messung in der Nähe der Streuscheibe und/oder die Drehzahl der Streuscheibe und/oder die Art der Streuscheibe und/oder der Wurfschaufeln und/oder des Streugutes ermittelt werden.

Der mittlere Abwurfwinkel jeder Streuscheibe gibt den Abwurfwinkel gemittelt über das insgesamt durch die Streuscheibe abgeworfene Streugut an, wobei der mittlere Abwurfwinkel ausgehend von einer entgegen der Fahrtrichtung des Schleuderstreuers verlaufenden, vom Streuscheibenzentrum ausgehenden Gerade gemessen wird. Der mittlere Abwurfwinkel gibt also den Winkel zwischen der Fahrtrichtung und der mittleren Wurfrichtung an, wobei die mittlere Wurfrichtung gewissermaßen vom Zentrum der jeweiligen Streuscheibe in Richtung des Massenschwerpunktes des Streufächers dieser Streuscheibe zeigt. Bei der mittleren Wurfweite handelt es sich um die mittlere Entfernung zwischen dem Zentrum der jeweiligen Streuscheibe und dem Punkt, an dem das Streugut auf den Erdboden auftrifft. Die mittlere Wurfweite wird aus den Messsignalen des Sensors vorzugsweise für die jeweilige Streuscheibe ermittelt, der der Sensor zugeordnet ist. Die Messrichtung der Sensoren gibt die Richtung an aus der die Messsignale durch den Sensor empfangen werden. Da der Sensor typischerweise einen Messbereich aufweist, ist die Messrichtung die mittlere Richtung oder Hauptrichtung aus der Messsignale durch den Sensor empfangen werden können.

Dass die Messrichtungen der zumindest zwei Sensoren in der horizontalen Ebene zumindest annähernd in Richtung des mittleren Abwurfwinkels der jeweiligen Streuscheibe ausgerichtet sind meint hierbei, dass jeder Sensor in Richtung des Winkels ausgerichtet ist, welcher sich bei Abtragen des mittleren Abwurfwinkels von der Fahrtrichtung nach außen hin ergibt. Anders gesagt ist der Sensor in Richtung der mittleren Wurfrichtung der jeweiligen Streuscheibe ausgerichtet. Es ist eine zumindest annähernde Ausrichtung in dieser Richtung deswegen zweckmäßig, weil die Sensoren typischerweise fest montiert und in ihrer Ausrichtung nicht variabel sind, der mittlere Abwurfwinkel jedoch je nach Einstellung der Drehzahl des Schleuderstreuers und des Aufgabepunktes des Streugutes auf die Streuscheibe in Grenzen variabel und anpassbar ist. Wichtig ist hier lediglich, dass die Ausrichtung der Sensoren derart gewählt wird, dass ein Bereich erfasst wird, in den nur Streugut von der Streuscheibe geworfen wird, der der Sensor zugeordnet ist. Dies kann insbesondere dadurch erreicht werden, dass der Sensor ungefähr in der Richtung des mittleren Abwurfwinkels der jeweiligen Streuscheibe ausgerichtet wird. Hierbei können die Messrichtungen der zumindest zwei Sensoren in der horizontalen Ebene einen Winkel von zumindest 10°, insbesondere zumindest 30°, zueinander aufweisen.

In einer möglichen Ausgestaltung der Erfindung sind die zumindest zwei Sensoren zur Messung der mittleren Fluggeschwindigkeit des Streugutes mittels Messung einer Dopplerverschiebung ausgebildet. Mittels Dopplerverschiebung ist die Fluggeschwindigkeit des Streugutes und hieraus abgeleitet die Wurfweite besonders effektiv und präzise ermittelbar. Hierbei wird die Frequenz der für die Messung ausgesendeten und an dem Streugut reflektierten Radarwellen ermittelt. Die Frequenz ist hierbei auf Grund des Dopplereffektes abhängig von der Geschwindigkeit des reflektierenden Streugutes.

Erfindungsgemäß verfügt der Schleuderstreuer über eine Datenverarbeitungseinheit und Stellmittel zur Anpassung von Parametern, wie Ausbringmenge, Aufgabepunkt des Streugutes auf die Streuscheiben und Drehzahl der Streuscheiben, zur Änderung der Streubildes, wobei die Datenverarbeitungseinheit ausgebildet ist, aus den Messsignalen der zumindest zwei Sensoren die mittlere Wurfweite des Streugutes für die jeweilige Streuscheibe zu ermitteln und die Stellmittel derart einzustellen, dass ein in der Datenverarbeitungseinheit hinterlegtes Sollstreubild eingestellt wird. Es ist also vorgesehen, dass in der Datenverarbeitungseinheit ein Sollstreubild bzw. eine gewünschte Verteilcharakteristik, beispielsweise in Form einer gewünschten Arbeitsbreite und Wurfweite, hinterlegt ist und die Parameter durch die Datenverarbeitungseinheit ggf. derart angepasst werden, dass das Sollstreubild eingestellt wird. Das Sollstreubild, welches durch einen Wert für die Wurfweite je Streuscheibe und vorzugsweise einen Wert für den mittleren Abwurfwinkel je Streuscheibe gekennzeichnet ist, zeichnet sich üblicherweise durch eine gegenüber Fahrfehlern besonders robuste Querverteilung des Düngers aus. Vorzugsweise weist das Streubild eine dreieckige Form auf, mit der größten Menge an verteiltem Streugut direkt hinter dem Schleuderstreuer und seitlich zu beiden Seiten abfallender Menge an verteiltem Streugut.

Es kann insbesondere vorgesehen sein, dass der Schleuderstreuer zusätzlich zu den Sensoren zur Ermittlung der Wurfweite auch über zumindest einen Sensor zur Ermittlung des Abwurfwinkels des Streugutes von den Streuscheiben verfügt. Hierbei kann es sich insbesondere um eine bezüglich des jeweiligen Streuscheibenzentrums konzentrische Anordnung von Radarsensoren handeln, deren Messbereich jeweils einen Teil des Abwurfbereiches der Streuscheibe abdecken, so dass sich aus der Intensität der durch das abgeworfene Streugut reflektierten Radarwellen die Dichte der Streugutpartikel im jeweiligen Messbereich und daraus der mittlere Abwurfwinkel der Streuscheibe ermitteln lässt. Auch diese Sensoren können durch die Datenverarbeitungseinheit ausgelesen werden und die Parameter zur Einstellung eines gewünschten Streubildes in Reaktion auf diese Sensorsignale ggf. angepasst werden.

In einer vorteilhaften Weiterbildung der Erfindung ist dem Schleuderstreuer ein Windsensor zur Ermittlung der Windstärke und/oder Richtung zugeordnet. Erfindungsgemäß reduziert die Datenverarbeitungseinheit den Einfluss von Windstärke und/oder Windrichtung auf das Streubild durch Vergleich und/oder Verrechnung der mittels der beiden Sensoren für die jeweilige Streuscheibe ermittelten Wurfweite, insbesondere durch Mittelwertbildung, und entsprechende Einstellung der Stellmittel. Ein dem Schleuderstreuer zugeordneter Windsensor kann hierbei einen Windsensor umfassen, der direkt am Schleuderstreuer oder an einem den Schleuderstreuer ziehenden oder tragenden Schlepper angeordnet ist. Alternativ können auch per Datenverbindung Messdaten von einer stationären Messstation in der Nähe des Schleuderstreuers, beispielsweise in einigen 100 m oder wenigen km Entfernung, berücksichtigt werden.

Erfindungsgemäß ist vorgesehen, die für die beiden Streuscheiben ermittelten Wurfweiten und/oder Fluggeschwindigkeiten zu vergleichen und/oder zu verrechnen. Auf Grund der Tatsache, dass die Messrichtung der Sensoren in der horizontalen Ebene nichtparallel ausgerichtet ist, wirkt sich der Wind in der Regel unterschiedlich auf das durch die beiden Sensoren erfasste Streugut aus. Insbesondere für den Fall, dass die Verteilcharakteristiken der beiden Streuscheiben identisch sein sollen, kann durch Mittelung der ermittelten Werte für die Wurfweite bzw. Fluggeschwindigkeit der Einfluss von Wind auf das Streubild ermittelt und berücksichtigt werden.

Beansprucht wird zudem ein Verfahren zur Ermittlung des Streubildes bei einem landwirtschaftlichen Schleuderstreuer mit den Merkmalen des Anspruchs 5. Demnach werden zur Reduktion des Einflusses von Windstärke und/oder Windrichtung auf die Ermittlung des Streubildes eine ermittelte erste Größe und zumindest eine über einen der zweiten Streuscheibe zugeordneten zweiten Sensor zweite ermittelte Größe berücksichtigt, wobei die für die beiden Streuscheiben ermittelten Wurfweiten und/oder Fluggeschwindigkeiten verglichen und/oder verrechnet werden. Bei der ermittelten ersten Größe handelt es sich um eine erste zu der Fluggeschwindigkeit des abgeworfenen Streugutes proportionale Größe nach dem Abwurf von der ersten von zwei Streuscheiben. Es wird also nach dem Abwurf des Streugutes von der oder den Streuscheiben eine Größe ermittelt, die zu der Fluggeschwindigkeit des Streugutes proportional ist. Hierbei kann es sich insbesondere um eine gemessene Dopplerfrequenz der abgeworfenen Streugutpartikel handeln. Die gemessene Dopplerfrequenz der abgeworfenen Streugutpartikel ist also proportional zur Geschwindigkeit der Streugutpartikel. Zur Berücksichtigung der Dopplerfrequenz ist es notwendig, dass das Messsignal eine signifikant horizontale Komponente aufweist, um in dieser Flugrichtung der Streugutpartikel die Dopplerfrequenz und damit die Geschwindigkeit der Streugutpartikel bestimmen zu können. Im Unterschied zur Messung der Querverteilung mittels Radarsensoren in der Nähe der Streuscheiben wird die Messung der Wurfweite der Streugutpartikel durch einen Sensor durchgeführt, der üblicherweise weiter oben am Schleuderstreuer angeordnet und derart ausgerichtet ist, dass die Dopplerfrequenz der sich bewegenden Streugutpartikel in einiger Entfernung, insbesondere in einem Abstand von mehreren Metern hinter dem Schleuderstreuer ermittelt wird. Eine Messung einer ersten zu der Fluggeschwindigkeit des abgeworfenen Streugutes proportionalen Größe nach dem Abwurf von der und/oder den Streuscheiben zeichnet sich hierbei dadurch aus, dass diese erste Größe an einer Position bestimmt wird, an der die Fluggeschwindigkeit der Streugutpartikel sich nach dem Abwurf bereits signifikant reduziert hat. Weitere Größen, wie beispielsweise die Fahrgeschwindigkeit des Traktors können bei der Ermittlung der Wurfweite ebenfalls berücksichtigt werden.

Erfindungsgemäß ist vorgesehen, zur Reduktion des Einflusses von Windstärke und/oder Windrichtung auf die Ermittlung des Streubildes die ermittelte erste Größe und zumindest eine über einen der zweiten Streuscheibe zugeordneten zweiten Sensor zweite ermittelte Größe zu berücksichtigen, wobei die für die beiden Streuscheiben ermittelten Wurfweiten und/oder Fluggeschwindigkeiten verglichen und/oder verrechnet werden. Die Einstellung der gewünschten Sollstreubilder erfolgt typischerweise in einer windgeschützten Streuhalle. Hierbei werden Messreihen für verschiedene Düngertypen und Arbeitsbreiten durchgeführt, bei denen die Messwerte der Sensoren am Schleuderstreuer zur Ermittlung der Wurfweite und des mittleren Abwurfwinkels bei verschiedenen Parametern des Schleuderstreuers, wie Drehzahl und Aufgabepunkt, ermittelt und mit dem tatsächlichen Streubild verglichen werden. Auf diese Weise lassen sich ideale Parameter für die Wurfweite und den mittleren Abwurfwinkel ermitteln, die für die jeweilige Arbeitsbreite das ideale Sollstreubild charakterisieren. Die Wurfweite ist hierbei im Rahmen der Erfindung der mittlere Abstand zwischen Streuscheibenzentrum und dem Auftreffpunkt des Streugutes auf die landwirtschaftliche Fläche. Bei der Arbeit auf dem Feld kann Windeinfluss zu einer Verfälschung der Messwerte für die Wurfweite führen. Der Wind kann beispielsweise zu einer reduzierten Wurfweite in der Messrichtung des Sensors führen, wenn der Wind dieser entgegengerichtet ist. Dies führt zu einem veränderten Messwert und somit zu einer unerwünschten Anpassung der Parameter des Streuvorganges durch die Datenverarbeitungseinheit. Um dies zu verhindern soll möglichst ein hinsichtlich des Windeinflusses bereinigter Messwert für die Wurfweite ermittelt werden. Dies kann erfindungsgemäß erreicht werden, indem eine zweite ermittelte Größe bei der Auswertung des Messwertes für die Wurfweite und/oder Fluggeschwindigkeit berücksichtigt wird. Es ist hierbei im Rahmen der Erfindung denkbar verschiedene zweite Messgrößen zur Bestimmung und/oder Reduktion des Windeinflusses zu ermitteln und ggf. zur Verbesserung des Ergebnisses auch zu kombinieren.

So ist in einer vorteilhaften Weiterbildung der Erfindung vorgesehen, dass der Schleuderstreuer über einen Windsensor zur Ermittlung der Windrichtung und/oder der Windstärke verfügt und die ermittelte Windrichtung und/oder Windstärke als weitere zweite ermittelte Größe bei der Ermittlung des Streubildes berücksichtigt wird. Je nach Windstärke und/oder Richtung ist also vorgesehen, den Einfluss auf die Wurfweite zu ermitteln und/oder zu reduzieren durch Berücksichtigung der Windstärke und/oder Windrichtung. Je nach Windrichtung kann beispielsweise vorgesehen sein, die Windstärke oder eine zu der Windstärke proportionale Größe additiv oder multiplikativ bei der Bestimmung der Wurfweite zu berücksichtigen. Je nach Windrichtung kann der Wind zu einer vergrößerten oder verringerten Wurfweite im Vergleich zur Windstille führen. Es kann entsprechend vorgesehen sein, die Windrichtung zusätzlich bei der Ermittlung der Wurfweite zu berücksichtigen.

Der Schleuderstreuer verfügt über einen zweiten Sensor, insbesondere Radarsensor, zur berührungslosen Ermittlung einer zu der Fluggeschwindigkeit des abgeworfenen Streugutes proportionalen zweiten Größe nach dem Abwurf von der Streuscheibe, wobei der erste Sensor einer ersten Streuscheibe und der zweite Sensor einer zweiten Streuscheibe des Schleuderstreuers zugeordnet ist und wobei die ermittelte erste Größe und zweite Größe bei der Ermittlung des Streubildes berücksichtigt wird. Eine Reduktion des Windeinflusses auf die ermittelte erste Größe kann nun in einfacher Weise durch Berücksichtigung der zweiten Größe erreicht werden. Dies ergibt sich daraus, dass die Messrichtung der Sensoren in horizontaler Ebene nichtparallel ausgerichtet ist. Zur genaueren Ermittlung der Wurfweite ist also vorgesehen, beiden Streuscheiben eines Schleuderstreuers je einen Sensor, insbesondere Radarsensor, zur Ermittlung der Wurfweite zuzuordnen, wobei der jeweilige Sensor bevorzugt die Wurfweite des Streugutes ermittelt, welches von der Streuscheibe abgeworfen wurde, der der Sensor zugeordnet ist. Gewöhnlich sind die gewünschten Streubilder der beiden Streuscheiben und damit die Parameter zumindest annähernd identisch, so dass auch die Wurfweite der beiden Streuscheiben identisch sein sollte. Lediglich in Randbereichen einer landwirtschaftlichen Fläche ist üblicherweise die Verteilcharakteristik der ersten Streuscheibe unterschiedlich von der der zweiten Streuscheibe. Da je nach Windrichtung der Windeinfluss auf die Messergebnisse wegen der unterschiedlichen Messrichtungen der Sensoren unterschiedlich ist, kann durch eine Verrechnung der Messwerte der beiden Sensoren, insbesondere eine Mittelwertbildung, der Einfluss des Windes auf die Wurfweite herausgerechnet bzw. reduziert werden, falls die gewünschte Wurfweite für die erste und zweite Streuscheibe identisch ist.

In einer vorteilhaften Weiterbildung der Erfindung wird eine zu der Wurfweite proportionale Größe aus der ersten und zweiten Größe und der Umdrehungsgeschwindigkeit der zumindest einen Streuscheibe sowie vorzugsweise der Art der verwendeten Streuscheiben und/oder Wurfschaufeln ermittelt. Es ist also vorgesehen, für die Ermittlung der Wurfweite oder einer hierzu proportionalen Größe die erste und die zweite ermittelte Größe zu berücksichtigen. Zudem ist zur Ermittlung der Wurfweite vorgesehen, die Abwurfgeschwindigkeit von der jeweiligen Streuscheibe oder eine hierzu proportionale Größe zu ermitteln, diese Abwurfgeschwindigkeit lässt sich aus der Drehzahl der Streuscheiben und vorzugsweise unter Berücksichtigung der verwendeten Streuscheiben und/oder Wurfschaufeln abschätzen. Zur genaueren Bestimmung der Abwurfgeschwindigkeit kann zudem vorgesehen sein, die Art des ausgebrachten Streugutes zu berücksichtigen. Alternativ kann zur Bestimmung der Abwurfgeschwindigkeit auch ein Sensor zur Ermittlung derselben in unmittelbarer Nähe der Streuscheibe angeordnet sein.

In einer vorteilhaften Weiterbildung ist vorgesehen, zur Einstellung eines Sollstreubildes die erste und zweite Größe bei der Einstellung der Parameter des Schleuderstreuers, insbesondere Streuscheibendrehzahl und/oder Aufgabepunkt des Streugutes auf die Streuscheiben, zu berücksichtigen. Es ist also vorgesehen, den Einfluss des Windes auf die gemessene Größe, insbesondere Fluggeschwindigkeit oder Wurfweite, zu reduzieren, so dass der ermittelte Wert mit dem in der windstillen Streuhalle ermittelten Sollstreubild vergleichbar ist und das gewünschte Sollstreubild durch Anpassung der Parameter des Schleuderstreuers in gewünschter Weise einstellbar ist.

Weitere vorteilhafte Ausgestaltungen ergeben sich aus den Figuren und der Beispielsbeschreibung, hierbei zeigen
- Fig. 1: einen landwirtschaftlichen Schleuderstreuer auf einer landwirtschaftlichen Fläche in Seitenansicht,
- Fig. 2: einen landwirtschaftlichen Schleuderstreuer auf einer landwirtschaftlichen Fläche, dargestellt von oben und
- Fig. 3: einen landwirtschaftlichen Schleuderstreuer bei der Bearbeitung einer landwirtschaftlichen Fläche unter Windeinfluss, dargestellt von oben.

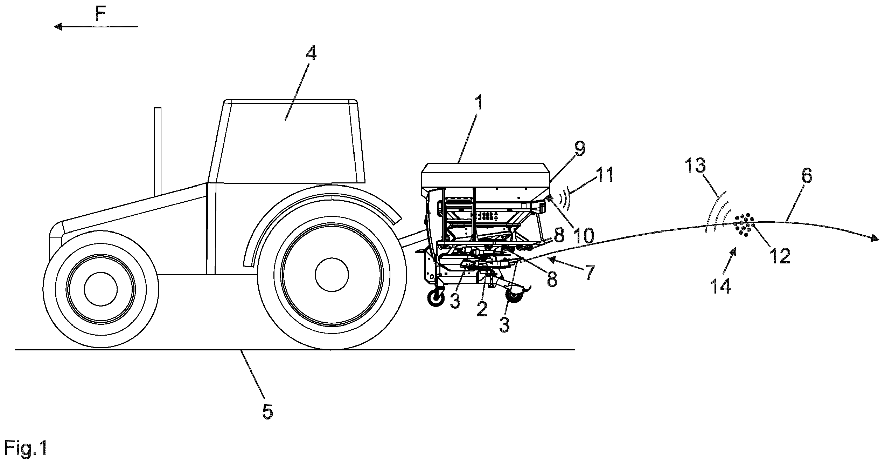

Ein landwirtschaftlicher Schleuderstreuer 1 mit Streuscheiben 2 und darauf angeordneten Wurfschaufeln 3 ist in Fig. 1 gezeigt. Der Schleuderstreuer 1 ist an einen Schlepper 4 angebaut und wird in Fahrtrichtung F über die landwirtschaftliche Fläche 5 bewegt. Das Streugut wird von den sich drehenden Streuscheiben entgegen der Fahrtrichtung F in Breitverteilung auf der landwirtschaftlichen Fläche 5 ausgebracht. Dabei bewegt sich das Streugut beispielsweise entlang einer Trajektorie 6. Auf seinem Weg entlang der Trajektorie wird das Streugut von verschiedenen Sensoren erfasst. Zunächst kann in unmittelbarer Nähe der Streuscheibe eine Sensoranordnung 7 vorgesehen sein, welche aus Radarsensoren 8 besteht, die in Umfangsrichtung, um die Streuscheibe 2 angeordnet sind. Die Radarsensoren 8 beaufschlagen das sich vorbei bewegende Streugut mit Radarwellen, wobei die reflektierte Intensität ein Maß ist für die Streugutdichte im jeweiligen Messbereich, so dass sich aus einer Gesamtschau der durch die Sensoren 8 der Sensoranordnung 7 ermittelten Messdaten der mittlere Abwurfwinkel für die jeweilige Streuscheibe 2 ermitteln lässt, der die Sensoranordnung 7 zugeordnet ist. Es kann vorgesehen sein, beiden Streuscheiben 2 des Schleuderstreuers 1 eine derartige Sensoranordnung 7 zuzuordnen.

Im oberen Bereich des Schleuderstreuers 1 bspw. an dem Vorratsbehälter 9 ist ein weiterer Radarsensor 10 pro Streuscheibe angeordnet. Dieser Sensor 10 beaufschlagt das weggeschleuderte Streugut in einiger Entfernung des Schleuderstreuers am Ort 14 mit Radarwellen 11. Die Radarwellen 11 werden hierbei beispielsweise an einem Düngerpaket 12, welches sich entlang der Trajektorie 6 bewegt, reflektiert. Die reflektierten Radarwellen 13 werden dabei von dem Sensor 10 erfasst und hinsichtlich ihrer Frequenz und ggf. Amplitude ausgewertet. Der Frequenzunterschied zwischen ausgesendeten Radarwellen 11 und reflektierten Radarwellen 13 ist ein Maß für die Bewegungsgeschwindigkeit des Düngerpakets 12 in Ausbreitungsrichtung der Radarwellen 11.

In einer nicht dargestellten, am Düngerstreuer 1 oder Schlepper 4 angeordneten Datenverarbeitungsvorrichtung kann die Bewegungsgeschwindigkeit des Düngerpakets 12 aus der Frequenzdifferenz der Radarwellen 11 und 13 bestimmt werden. Zusätzlich ist die Abwurfgeschwindigkeit des Streugutes von der Streuscheibe 2 aus der Drehzahl der Streuscheibe durch die Datenverarbeitungseinheit ermittelbar. Hierfür kann insbesondere der Typ der verwendeten Streuscheibe 2 und/oder der Wurfschaufeln 3 berücksichtigt werden. Die Abwurfgeschwindigkeit des Streugutes ist näherungsweise abhängig von der Drehzahl und der Art der verwendeten Streuscheibe und Wurfschaufeln. Zusätzlich kann vorgesehen sein, die Art des verwendeten Streugutes bei der Bestimmung der Abwurfgeschwindigkeit zu berücksichtigen, wobei sich herausgestellt hat, dass die Abwurfgeschwindigkeit für verschiedene Streugüter zumindest annähernd identisch ist. Alternativ oder zusätzlich kann in unmittelbarer Nähe der Streuscheiben 2 ein nicht dargestellter Sensor zur Ermittlung der Abwurfgeschwindigkeit vorgesehen sein. Aus der Differenz von Abwurfgeschwindigkeit und der ermittelten Geschwindigkeit der Düngerpartikel am Ort 14 kann nun durch die Datenverarbeitungseinheit eine mittlere Wurfweite des Streugutes ermittelt werden. Bei einem Schleuderstreuer 1 mit zwei Streuscheiben 2 ist vorgesehen, je eine Sensoranordnung 7 und einen Sensor 10 pro Streuscheibe 2 an dem Schleuderstreuer 1 anzuordnen.

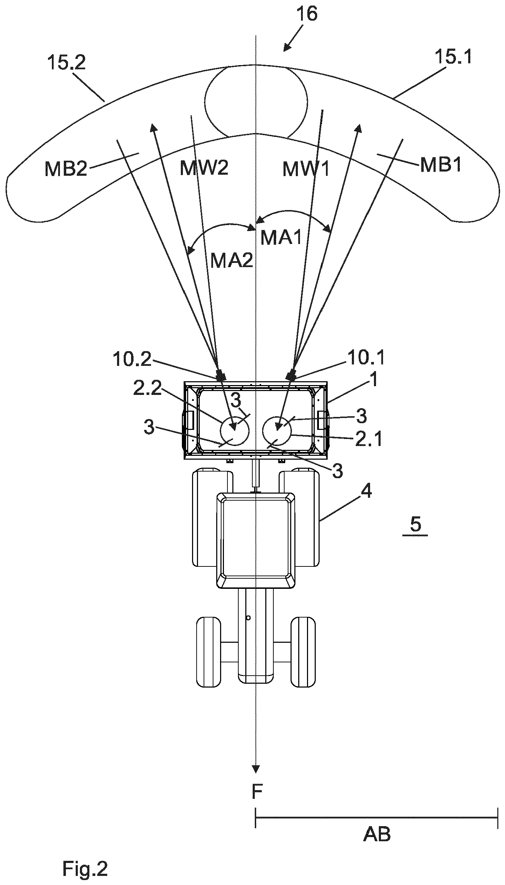

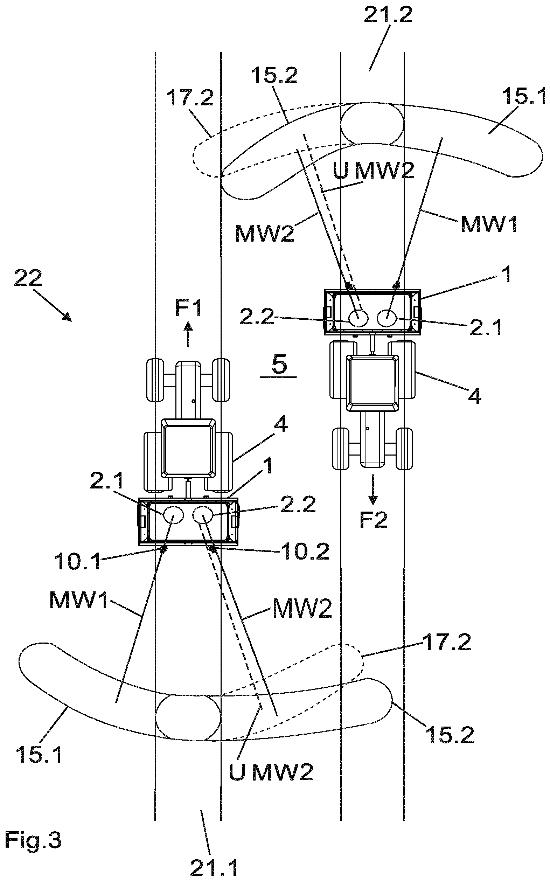

Ein Schleuderstreuer 1 bei der Bearbeitung einer landwirtschaftlichen Fläche 5 in einer Ansicht von oben ist in Fig. 2 dargestellt. Hierbei erzeugt eine erste Streuscheibe 2.1 den Teilstreufächer 15.1 und eine zweite Streuscheibe 2.2 den Teilstreufächer 15.2, wobei es zu einer Überlappung der Teilstreufächer 15.1, 15.2 im Bereich 16 kommt. Der Streufächer des Schleuderstreuers 1 ergibt sich nun als Einhüllende der Teilstreufächer 15.1, 15.2, wobei die in dem Streufächer abgelegte Menge an Streugut von der Mitte zu den Rändern abnimmt. Im Überlappungsbereich 16 ist die Menge an verteiltem Streugut somit am größten. Der Streufächer ist in den Abbildungen 2 und 3 lediglich schematisch dargestellt und kann in der Realität eine hiervon abweichende Form, Größe und/oder Position aufweisen, insbesondere breiter sein. Der Streufächer ist charakterisiert durch die mittlere Wurfweite MW1, MW2 für jede Streuscheibe 2.1, 2.2, welche den mittleren Abstand zwischen dem Streuscheibenzentrum und der Position angibt, an der das Streugut auf den Boden auftrifft und den mittleren Abwurfwinkel MA1, MA2, welche den Winkel zwischen der Fahrtrichtungsachse und dem mittleren Richtungsvektor des von der Streuscheibe 2.1, 2.2 abgeworfenen Streugutes, mithin der mittleren Wurfrichtung, angibt. Der mittlere Abwurfwinkel zeigt hierbei typischerweise die Position des Massenschwerpunktes innerhalb des Teilstreufächers 15.1, 15.2 an. Die Streufächerbreite gibt die Streubreite des Schleuderstreuers 1 an und die Arbeitsbreite AB entspricht typischerweise der halben Streufächerbreite, da mit einem Schleuderstreuer normalerweise überlappend gearbeitet wird. In diesem Fall reicht der Streufächer dann idealerweise an beiden Seiten bis zur Mitte der benachbarten Fahrspur. Erfindungsgemäß ist nun eine Messvorrichtung 10.1, 10.2 pro Streuscheibe an dem Schleuderstreuer 1 angeordnet. Die Messrichtung der Sensoren weist hierbei einen Winkel zur Fahrtrichtungsachse F auf, so dass kein Streugut durch die Sensoren 10.1, 10.2 erfasst wird, welches in den Überlappungsbereich 16 geworfen wird. Anders ausgedrückt wird durch einen ersten Sensor 10.1 kein Streugut erfasst, welches durch die zweite Streuscheibe 2.2 abgeworfen wurde und umgekehrt. Die Messrichtung zeigt hierbei in Richtung der Winkelhalbierenden des Messbereichs MB1, MB2, welcher den Bereich angibt, welcher durch den Sensor 10.1, 10.2 jeweils erfasst wird. Die Messrichtung der Sensoren 10.1, 10.2 zeigt hierbei jeweils vorzugsweise zumindest annähernd in Richtung der mittleren Wurfrichtung, weist also denselben Winkel zur Fahrtrichtung auf, wie der jeweilige mittlere Abwurfwinkel MW1, MW2. Hierdurch wird sichergestellt, dass jeweils nur Streugut erfasst wird, welches durch die Streuscheibe 2.1, 2.2 abgeworfen wurde, der der Sensor 10.1, 10.2 zugeordnet ist. Da der mittlere Abwurfwinkel MA1, MA2 der Streuscheiben 2.1, 2.2 in Grenzen durch die Anpassung der Streuscheibendrehzahl und/oder des Aufgabepunktes des Streugutes auf die Streuscheibe anpassbar ist, der Sensor 10.1, 10.2 jedoch vorzugsweise fest an dem Schleuderstreuer 1 montiert ist, ist nur eine ungefähre Parallelausrichtung der Messrichtung und des mittleren Abwurfwinkels möglich. Eine derartige ungefähre Ausrichtung der Sensoren 2.1, 2.2 ist jedoch vollkommen ausreichend, da der Winkel zwischen der Messrichtung und der Fahrtrichtung lediglich derart zu wählen ist, dass durch den jeweiligen Sensor kein von der benachbarten Streuscheibe abgeworfenes Streugut erfasst wird. Der Winkel zwischen Fahrtrichtung und Messrichtung kann in einer bevorzugten Ausgestaltung zumindest 10° betragen, beispielsweise ungefähr 30°, wie in der Fig. 2 gezeigt.

Der Einfluss von Wind auf das Streubild bzw. die Messwerte der Sensoren ist in Fig. 3 dargestellt. Diese zeigt Fahrspuren 21.1, 21.2 auf einer landwirtschaftlichen Fläche 5. Ein Schleuderstreuer 1 ist bei der Bearbeitung der landwirtschaftlichen Fläche 5 auf benachbarten Fahrspuren und jeweils entgegengesetzter Fahrtrichtung F1, F2 dargestellt. Das Streugut wird durch die Streuscheiben 2.1, 2.2 in den Teilstreufächer 15.1, 15.2 auf der landwirtschaftlichen Fläche verteilt, wobei das Streubild durch den Einfluss von Wind, dargestellt in Stärke und Richtung als Vektor 22, verzerrt wird. Dieses ist in Fig. 3 dargestellt durch die durchgezogenen Linien des durch den Wind verzerrten Streufächers 15.2 und den im Vergleich unverzerrten, gestrichelt dargestellten Streufächer 17.2. Hierbei ist bei einer Bewegung des Schleuderstreuers entlang der Fahrtrichtung F1 die Windrichtung überwiegend parallel zu der Bewegungsrichtung des Streugutes, welches sich in Richtung des mittleren Abwurfwinkels der Streuscheibe 2.2 bewegt und überwiegend senkrecht zu der Bewegungsrichtung des Streugutes, welches sich in Richtung des mittleren Abwurfwinkels der Streuscheibe 2.1 bewegt. Die Wurfweite des Streugutes der Streuscheibe 2.2 in Messrichtung des Sensors 10.2 wird somit, je nach Windstärke, signifikant durch den Einfluss des in paralleler Richtung wehenden Windes beeinflusst, was zu einer veränderten gemessenen Wurfweite führt. Dies ist in Fig. 3 dargestellt durch die gestrichelte Linie, welche die unveränderte, bei Windstille gemessene Wurfweite UMW2 darstellt, welche kleiner ist im Vergleich zur durch den Wind beeinflussten, gemessenen Wurfweite MW2. Da der Sensor 10.2 zumindest annähernd in Richtung des mittleren Abwurfwinkels der Streuscheibe 2.2 ausgerichtet ist, ermittelt dieser Sensor also eine durch den Wind vergrößerte Wurfweite MW2. Die gestrichelte Linie UMW2 ist zur Verdeutlichung der Darstellung leicht versetzt zu der gemessenen Wurfweite MW2 dargestellt. Durch den Wind wird ebenfalls die Form des Streufächers beeinflusst, was in Fig. 3 in einer leichten Asymmetrie der Streufächer zum Ausdruck kommt.

Die ermittelte Wurfweite des Sensors 10.1 ist annähernd unverändert, da der mittlere Abwurfwinkel der Streuscheibe 10.1 annähernd senkrecht auf der Richtung des Windes 22 steht. Durch Mittelung der ermittelten Wurfweiten MW1 und MW2 können nun hinsichtlich des Einflusses des Windes auf die Wurfweiten korrigierte Wurfweiten MW1, MW2 ermittelt werden, welche zumindest bezüglich der Beeinflussung durch den Wind homogenisiert sind. Die korrigierten bzw. homogenisierten Wurfweiten MW1 und MW2 werden nun durch eine nicht dargestellte Datenverarbeitungseinheit verwendet, um die Parameter des Schleuderstreuers 1, wie Drehzahl der Streuscheiben und Aufgabepunkt des Streugutes in der Weise anzupassen, dass ein gewünschtes Sollstreubild eingestellt wird. Hierbei ist es das Ziel der Verrechnung der beiden Wurfweitenmesswerte MW1 und MW2 den Einfluss des Windes auf den Messwert MW2 zu reduzieren, um die Messwerte an die Messbedingungen, unter welchen das Sollstreubild, beispielsweise in einer windgeschützten Streuhalle, eingestellt wurde, anzupassen. Auf diese Weise lässt sich ein gewünschtes Streubild trotz des Einfluss des Windes auf die Verteilung des Streugutes einstellen.

Entsprechend ist die Windrichtung bei der Fahrt entlang der Fahrspur 21.2 in Fahrtrichtung F2 annähernd antiparallel zu dem mittleren Abwurfwinkel des Streugutes ausgerichtet, welches von der Streuscheibe 2.2 abgeworfen wird. Hierdurch ist die mittlere Wurfweite MW2 der Streuscheibe 2.2 reduziert gegenüber einer unveränderten mittleren Wurfweite UMW2 bei Windstille. Durch Verrechnung, beispielsweise Mittelwertbildung der Messwerte MW1 und MW2 kann auch hier der Einfluss des Windes auf die Wurfweite MW2 reduziert werden und das gewünschte Sollstreubild durch die Datenverarbeitungseinheit effektiver eingestellt werden.

Wichtig ist, dass die Korrektur der Wurfweite durch Mittelwertbildung nicht dazu dient, den Windeinfluss auf die Wurfweite bei der Einstellung des Schleuderstreuers zu berücksichtigen, indem beispielsweise bei Gegenwind relativ zum mittleren Abwurfwinkel eine größere Drehzahl gewählt wird, um dem Gegenwind entgegenzuwirken, sondern es soll der mittlere Abwurfwinkel gerade bezüglich des Windeinflusses bereinigt werden. Der Grund hierfür ist, dass zur Einstellung des gewünschten Streubildes die Messdaten möglichst denen unter idealen Bedingungen (windgeschützte Streuhalle) entsprechen müssen, da diese ansonsten nicht vergleichbar wären.

Der in Fig. 3 dargestellte Schleuderstreuer umfasst vorzugsweise ebenso jeweils eine Sensoranordnung pro Streuscheibe zur Messung des mittleren Abwurfwinkels. Zusätzlich kann jedoch vorgesehen sein, einen in der Fig. 3 nicht dargestellten Windsensor an dem Schleuderstreuer 1 oder Schlepper 4 anzuordnen, welcher Windstärke und Windrichtung 22 ermittelt. In der Datenverarbeitungseinheit könnte in dem Regelkreis zur Einstellung des Sollstreubildes dann der Einfluss des Windes auf das Streubild berücksichtigt werden. In diesem Fall wird also zunächst beispielsweise eine Mittelwertbildung der mittleren Wurfweiten MW1, MW2 vorgenommen, um die Messdaten hinsichtlich des gewünschten Sollstreubildes auszuwerten. Die einzustellenden Parameter wie Drehzahl und Aufgabepunkt werden dann unter Berücksichtigung der gemessenen Windrichtung und Windstärke ggf. asymmetrisch zum Ausgleich des Windeinflusses angepasst.

## Patentansprüche

1. Landwirtschaftlicher Schleuderstreuer (1) mit zwei Streuscheiben (2.1, 2.2) und jeweils zumindest einem Sensor (10.1, 10.2), vorzugsweise Radarsensor, pro Streuscheibe zur Ermittlung der mittleren Wurfweite (MW1, MW2) der Streuscheibe (2.1, 2.2), wobei die Sensoren (10.1, 10.2) derart am Schleuderstreuer (1) angeordnet sind, dass die Wurfweitenmessung in einer Entfernung von den Streuscheiben (2.1, 2.2) des Schleuderstreuers durchgeführt wird, bei der eine signifikante Überlappung der Streubereiche (15.1, 15.2) der beiden Streuscheiben (2.1, 2.2) erfolgt, wobei
die Messrichtungen der zumindest zwei Sensoren (10.1, 10.2) in der horizontalen Ebene zumindest annähernd in Richtung des mittleren Abwurfwinkels (MA1, MA2) der jeweiligen Streuscheibe (2.1, 2.2) ausgerichtet sind,
mit einer Datenverarbeitungseinheit und Stellmitteln zur Anpassung von Parametern, wie Ausbringmenge, Aufgabepunkt des Streugutes auf die Streuscheiben und Drehzahl der Streuscheiben, zur Änderung des Streubildes,
wobei die Datenverarbeitungseinheit ausgebildet ist, aus den Messsignalen der zumindest zwei Sensoren (10.1, 10.2) die mittlere Wurfweite (MW1, MW2) des Streugutes zu ermitteln und die Stellmittel derart einzustellen, dass ein in der Datenverarbeitungseinheit hinterlegtes Sollstreubild eingestellt wird, **dadurch gekennzeichnet, dass** die Datenverarbeitungseinheit den Einfluss von Windstärke und/oder Windrichtung auf das Streubild durch Vergleich und/oder Verrechnung der mittels der beiden Sensoren (10.1, 10.2) für die jeweilige Streuscheibe (2.1, 2.2) ermittelten Wurfweite (MW1, MW2), insbesondere durch Mittelwertbildung, und entsprechende Einstellung der Stellmittel reduziert.

2. Landwirtschaftlicher Schleuderstreuer nach Anspruch 1, **dadurch gekennzeichnet, dass** die Messrichtungen der zumindest zwei Sensoren (10.1, 10.2) in der horizontalen Ebene einen Winkel von zumindest 10°, insbesondere zumindest 30°, zueinander aufweisen.

3. Landwirtschaftlicher Schleuderstreuer nach Anspruch 1 oder 2, **dadurch gekennzeichnet, dass** die zumindest zwei Sensoren (10.1, 10.2) zur Messung der mittleren Fluggeschwindigkeit des Streugutes mittels Messung einer Dopplerverschiebung ausgebildet sind.

4. Landwirtschaftlicher Schleuderstreuer nach zumindest einem der vorigen Ansprüche , **dadurch gekennzeichnet, dass** ein Windsensor zur Ermittlung der Windstärke und/oder Richtung dem Schleuderstreuer (1) zugeordnet ist und die Datenverarbeitungseinheit den Einfluss der ermittelten Windstärke und/oder Windrichtung auf die Wurfweite (MW1, MW2) ermittelt und/oder bei der Einstellung der Stellmittel berücksichtigt.

5. Verfahren zur Ermittlung des Streubildes bei einem landwirtschaftlichen Schleuderstreuer, wobei der Schleuderstreuer über einen ersten Sensor (10.1), insbesondere Radarsensor, zur berührungslosen Ermittlung einer zu der Fluggeschwindigkeit und/oder Wurfweite des abgeworfenen Streugutes proportionalen ersten Größe (MW1) nach dem Abwurf von der ersten von zwei Streuscheiben (2.1) verfügt,
**dadurch gekennzeichnet, dass**
zur Reduktion des Einflusses von Windstärke und/oder Windrichtung auf die Ermittlung des Streubildes die ermittelte erste Größe (MW1) und zumindest eine über einen der zweiten Streuscheibe (2.2) zugeordneten zweiten Sensor (10.2) zweite ermittelte Größe (MW2) berücksichtigt wird, wobei die für die beiden Streuscheiben ermittelten Wurfweiten und/oder Fluggeschwindigkeiten verglichen und/oder verrechnet werden.

6. Verfahren nach Anspruch 5, **dadurch gekennzeichnet, dass** der Schleuderstreuer (1) über einen Windsensor zur Ermittlung der Windrichtung und/oder der Windstärke verfügt und die ermittelte Windrichtung und/oder Windstärke als weitere zweite ermittelte Größe bei der Ermittlung des Streubildes berücksichtigt wird.

7. Verfahren nach Anspruch 5 oder 6, **dadurch gekennzeichnet, dass** der Schleuderstreuer über den zweiten Sensor (10.2), insbesondere Radarsensor, zur berührungslosen Ermittlung einer zu der Fluggeschwindigkeit und/oder Wurfweite des abgeworfenen Streugutes proportionalen zweiten Größe (MW2) nach dem Abwurf von der Streuscheibe verfügt, wobei der erste Sensor einer ersten Streuscheibe (2.1) und der zweite Sensor (10.2) einer zweiten Streuscheibe (2.2) des Schleuderstreuers zugeordnet ist und wobei die ermittelte erste Größe (MW1) und zumindest die ermittelte zweite Größe (MW2) bei der Ermittlung des Streubildes berücksichtigt wird.

8. Verfahren nach zumindest einem der Ansprüche 5 bis 7, **dadurch gekennzeichnet, dass** eine zu der Wurfweite proportionale Größe aus der ersten und zweiten Größe (MW1, MW2) und der Umdrehungsgeschwindigkeit der zumindest einen Streuscheibe sowie vorzugsweise der Art der verwendeten Streuscheiben (2.1, 2.2) und/oder Wurfschaufeln (3) ermittelt wird.

9. Verfahren nach zumindest einem der Ansprüche 5 bis 8, **dadurch gekennzeichnet, dass** zur Einstellung eines Sollstreubildes die erste und zweite Größe (MW1, MW2) bei der Einstellung der Parameter des Schleuderstreuers, insbesondere Streuscheibendrehzahl und/oder Aufgabepunkt des Streugutes auf die Streuscheiben, berücksichtigt wird.

## Claims

1. Agricultural centrifugal spreader (1) having two spreading discs (2.1, 2.2) and in each case at least one sensor (10.1, 10.2), preferably a radar sensor, per spreading disc in order to determine the mean throwing distance (MW1, MW2) of the spreading discs (2.1, 2.2), wherein the sensors (10.1, 10.2) are arranged on the centrifugal spreader (1) in such a way that the throwing distance measurement is carried out at a distance from the spreading discs (2.1, 2.2) of the centrifugal spreader at which there is a significant overlap of the spreading ranges (15.1, 15.2) of the two spreading discs (2.1, 2.2), wherein
the measuring directions of the at least two sensors (10.1, 10.2) in the horizontal plane are oriented at least approximately in the direction of the mean ejection angle (MA1, MA2) of the respective spreading disc (2.1, 2.2),
having a data processing unit and adjusting means for adapting parameters, such as dispensing rate, application point of the spreading material onto the spreading discs and rotational speed of the spreading discs, in order to change the spreading pattern, wherein the data processing unit is configured to determine, from the measurement signals of the at least two sensors (10.1, 10.2), the mean throwing distance (MW1, MW2) of the spreading material and to set the adjusting means in such a way that a setpoint spreading pattern stored in the data processing unit is set,
**characterized in that**
the data processing unit reduces the influence of wind strength and/or wind direction on the spreading pattern by comparing and/or calculating the throwing distance (MW1, MW2) determined for the respective spreading disc (2.1, 2.2) by means of the two sensors (10.1, 10.2), in particular by averaging, and setting the adjusting means accordingly.

2. Agricultural centrifugal spreader according to Claim 1, **characterized in that** the measuring directions of the at least two sensors (10.1, 10.2) in the horizontal plane are at an angle of at least 10°, in particular at least 30°, to one another.

3. Agricultural centrifugal spreader according to Claim 1 or 2, **characterized in that** the at least two sensors (10.1, 10.2) are configured to measure the mean flying speed of the spreading material by measuring a Doppler shift.

4. Agricultural centrifugal spreader according to at least one of the preceding claims, **characterized in that** a wind sensor for determining the wind strength and/or direction is assigned to the centrifugal spreader (1), and the data processing unit determines the influence of the determined wind strength and/or wind direction on the throwing distance (MW1, MW2) and/or takes it into account when setting the adjusting means.

5. Method for determining the spreading pattern in an agricultural centrifugal spreader, wherein the centrifugal spreader has a first sensor (10.1), in particular a radar sensor, for contactlessly determining a first variable (MW1) that is proportional to the flying speed and/or throwing distance of the ejected spreading material following ejection from the first of two spreading discs (2.1),
**characterized in that**,
to reduce the influence of wind strength and/or wind direction on the determination of the spreading pattern, the determined first variable (MW1) and at least one second variable (MW2) determined via a second sensor (10.2) assigned to the second spreading disc (2.2) are taken into account, wherein the throwing distances and/or flying speeds determined for the two spreading discs are compared and/or calculated.

6. Method according to Claim 5, **characterized in that** the centrifugal spreader (1) has a wind sensor for determining the wind direction and/or the wind strength, and the determined wind direction and/or wind strength is taken into account as the further second determined variable when determining the spreading pattern.

7. Method according to Claim 5 or 6, **characterized in that** the centrifugal spreader has the second sensor (10.2), in particular a radar sensor, for contactlessly determining a second variable (MW2) that is proportional to the flying speed and/or throwing distance of the ejected spreading material following ejection from the spreading disc, wherein the first sensor is assigned to a first spreading disc (2.1) and the second sensor (10.2) to a second spreading disc (2.2) of the centrifugal spreader, and wherein the determined first variable (MW1) and at least the determined second variable (MW2) are taken into account when determining the spreading pattern.

8. Method according to at least one of Claims 5 to 7, **characterized in that** a variable that is proportional to the throwing distance is determined from the first and second variable (MW1, MW2) and the speed of rotation of the at least one spreading disc and preferably the type of spreading discs (2.1, 2.2) and/or thrower blades (3) used.

9. Method according to at least one of Claims 5 to 8, **characterized in that**, to set a setpoint spreading pattern, the first and second variable (MW1, MW2) are taken into account when setting the parameters of the centrifugal spreader, in particular the spreading disc rotational speed and/or the application point of the spreading material on the spreading discs.

## Revendications

1. Épandeur centrifuge (1) agricole comprenant deux disques d'épandage (2.1, 2.2) et respectivement au moins un capteur (10.1, 10.2), de préférence un capteur radar, par disque d'épandage pour déterminer la portée de projection moyenne (MW1, MW2) du disque d'épandage (2.1, 2.2), les capteurs (10.1, 10.2) étant disposés sur l'épandeur centrifuge (1) de telle sorte que la mesure de la portée de projection est effectuée à une distance des disques d'épandage (2.1, 2.2) de l'épandeur centrifuge à laquelle se produit un chevauchement important des plages d'épandage (15.1, 15.2) des deux disques d'épandage (2.1, 2.2),
les directions de mesure des au moins deux capteurs (10.1, 10.2) dans le plan horizontal sont orientées au moins approximativement dans la direction de l'angle de jet médian (MA1, MA2) du disque d'épandage (2.1, 2.2) respectif,
comprenant une unité de traitement de données et des moyens de commande destinés à adapter des paramètres tels que la quantité d'épandage, le point d'alimentation du produit d'épandage sur les disques d'épandage et la vitesse de rotation des disques d'épandage, en vue de modifier le profil d'épandage, l'unité de traitement de données étant configurée pour déterminer la portée de projection moyenne (MW1, MW2) du produit d'épandage à partir des signaux de mesure des au moins deux capteurs (10.1, 10.2) et pour régler les moyens de commande de telle sorte qu'un profil d'épandage de consigne stocké dans l'unité de traitement de données est réglé,
**caractérisé en ce que**
l'unité de traitement de données réduit l'influence de la force du vent et/ou de la direction du vent sur le profil d'épandage par comparaison et/ou calcul de la portée de projection (MW1, MW2) déterminée pour le disque d'épandage (2.1, 2.2) respectif au moyen des deux capteurs (10.1, 10.2), notamment par un calcul de la valeur moyenne et un réglage en conséquence des moyens de commande.

2. Épandeur centrifuge agricole selon la revendication 1, **caractérisé en ce que** les directions de mesure des au moins deux capteurs (10.1, 10.2) présentent, dans le plan horizontal, un angle minimal de 10°, de préférence d'au moins 30°.

3. Épandeur centrifuge agricole selon la revendication 1 ou 2, **caractérisé en ce que** les au moins deux capteurs (10.1, 10.2) sont configurés pour mesurer la vitesse de vol moyenne du produit d'épandage au moyen de la mesure d'un déplacement Doppler.

4. Épandeur centrifuge agricole selon au moins l'une des revendications précédentes, **caractérisé en ce qu'**un capteur de vent destiné à déterminer la force et/ou la direction du vent est associé à l'épandeur centrifuge (1) et l'unité de traitement de données détermine l'influence de la force du vent et/ou de la direction du vent déterminée sur la portée de projection (MW1, MW2) et/ou en tient compte lors du réglage des moyens de commande.

5. Procédé de détermination du profil d'épandage avec un épandeur centrifuge agricole, l'épandeur centrifuge disposant d'un premier capteur (10.1), notamment un capteur radar, destiné à la détermination sans contact d'une première grandeur (MW1) proportionnelle à la vitesse de vol et/ou à la portée de projection du produit d'épandage projeté après la projection depuis le premier parmi deux disques d'épandage (2.1), **caractérisé en ce qu'**en vue de réduire l'influence de la force du vent et/ou de la direction du vent sur la détermination du profil d'épandage, la première grandeur (MW1) déterminée et au moins une deuxième grandeur (MW2) déterminée par le biais d'un deuxième capteur (10.2) associé au deuxième disque d'épandage (2.2) sont prises en compte, les portées de projection et/ou les vitesses de vol déterminées pour les deux disques d'épandage étant comparés et/ou calculées.

6. Procédé selon la revendication 5, **caractérisé en ce que** l'épandeur centrifuge (1) dispose d'un capteur de vent destiné à déterminer la direction du vent et/ou la force du vent et la direction du vent et/ou la force du vent déterminée est prise en compte en tant que deuxième grandeur déterminée supplémentaire lors de la détermination du profil d'épandage.

7. Procédé selon la revendication 5 ou 6, **caractérisé en ce que** l'épandeur centrifuge dispose d'un deuxième capteur (10.2), notamment un capteur radar, destiné à la détermination sans contact d'une deuxième grandeur (MW2) proportionnelle à la vitesse de vol et/ou à la portée de projection du produit d'épandage projeté après la projection depuis le disque d'épandage, le premier capteur étant associé à un premier disque d'épandage (2.1) et le deuxième capteur (10.2) à un deuxième disque d'épandage (2.2) de l'épandeur centrifuge et la première grandeur (MW1) déterminée et au moins la deuxième grandeur (MW2) déterminée sont prises en compte lors de la détermination du profil d'épandage.

8. Procédé selon au moins l'une des revendications 5 à 7, **caractérisé en ce qu'**une grandeur proportionnelle à la portée de projection est déterminée à partir de la première et de la deuxième grandeur (MW1, MW2) et de la vitesse de rotation de l'au moins un disque d'épandage ainsi que de préférence du type des disques d'épandage (2.1, 2.2) et/ou des pales d'éjection utilisés.

9. Procédé selon au moins l'une des revendications 5 à 8, **caractérisé en ce qu'**en vue de régler un profil d'épandage de consigne, la première et la deuxième grandeur (MW1, MW2) sont prises en compte lors du réglage des paramètres de l'épandeur centrifuge, notamment la vitesse de rotation des disques d'épandage et/ou le point d'alimentation du produit d'épandage sur les disques d'épandage.
